(19) **Europäisches Patentamt / European Patent Office / Office européen des brevets**

(11) **EP 1 699 103 B1**

(12) **EUROPEAN PATENT SPECIFICATION**

(45) Date of publication and mention of the grant of the patent:
**30.09.2015 Bulletin 2015/40**

(21) Application number: **04807353.0**

(22) Date of filing: **20.12.2004**

(51) Int Cl.:
*H01M 8/06* (2006.01)    *B01D 53/04* (2006.01)

(86) International application number:
**PCT/JP2004/018996**

(87) International publication number:
**WO 2005/062411 (07.07.2005 Gazette 2005/27)**

(54) **METHOD AND APPARATUS FOR PURIFYING AIR FOR FUEL CELL AND FUEL CELL**

VERFAHREN UND VORRICHTUNG ZUR REINIGUNG VON LUFT FÜR EINE BRENNSTOFFZELLE UND BRENNSTOFFZELLE

PROCEDE ET APPAREIL PERMETTANT DE PURIFIER L'AIR DESTINE A UNE PILE A COMBUSTIBLE ET PILE A COMBUSTIBLE

(84) Designated Contracting States:
**DE FR**

(30) Priority: **24.12.2003 JP 2003427216**

(43) Date of publication of application:
**06.09.2006 Bulletin 2006/36**

(73) Proprietors:
• **Bridgestone Corporation**
  **Tokyo 104-8340 (JP)**
• **Toshiba Fuel Cell Power Systems Corporation**
  **Tokyo 1058001 (JP)**

(72) Inventors:
• **MORI, Hisashi,**
  **Yokohama Plant, Bridgestone Corp.**
  **Yokohama-shi, Kanagawa 2440812 (JP)**
• **SHIGYO, Yasushige,**
  **Yokohama Plant, Bridgestone Corp.**
  **Yokohama-shi, Kanagawa 2440812 (JP)**

• **KUWABARA, Tadashi,**
  **Yokohama Plant, Bridgestone Corp.**
  **Yokohama-shi, Kanagawa 2440812 (JP)**
• **CHIZAWA, Hiroshi**
  **1-1, Shibaura 1-chome, Minato-ku, Tokyo (JP)**
• **AOKI, Tsutomu**
  **1-1, Shibaura 1-chome, Minato-ku, Tokyo (JP)**

(74) Representative: **Hoffmann Eitle**
**Patent- und Rechtsanwälte PartmbB**
**Arabellastraße 30**
**81925 München (DE)**

(56) References cited:
| | |
|---|---|
| EP-A1- 1 469 544 | WO-A1-95/13127 |
| WO-A1-03/085768 | WO-A1-03/085768 |
| WO-A2-03/023884 | JP-A- 5 112 767 |
| JP-A- 2000 300 687 | JP-A- 2002 103 506 |
| JP-A- 2003 001 028 | JP-A- 2003 001 028 |
| JP-A- 2004 327 429 | US-A- 5 213 912 |
| US-A1- 2004 247 510 | |

## Description

Technical Field

The present invention relates to methods treating fuel-cell air to remove certain components which are contained in air to be supplied to fuel cells and cause decreases in the cell voltage of the fuel cells. More specifically, the present invention relates to methods for cleaning fuel-cell air to maintain the characteristics of fuel cells and extend the lifetime thereof by efficiently removing certain components, such as sulfur dioxide ($SO_2$), which are contained in the fuel-cell air and cause decreases in the cell voltage of the fuel cells.

Background Art

A fuel cell is a device for generating an electromotive force by an electrochemical reaction between hydrogen and oxygen. It is known that when impurities are contained in a fluid of fuel or air to be supplied to the fuel cell, an electrode catalyst is poisoned resulting in a decrease in the cell voltage of the fuel cell; this, as a result, causes decreases in the generation efficiency and the lifetime of the fuel cell. Various methods for removing the impurities in the air or the fuel to be supplied to the fuel cell have been proposed.

Japanese Unexamined Patent Application Publication No. 2000-277139 discloses a method for removing impurities such as organic solvents in air by passing the air through a heated combustion catalyst layer to burn and decompose the impurities.

Japanese Unexamined Patent Application Publication No. 2000-327305 discloses a method for adsorbing and removing impurities such as $SO_x$ and $NO_x$ in air to be used for reforming fuel gas by treating the air with activated charcoal.

Japanese Unexamined Patent Application Publication No. 2001-313057 discloses a method for removing gas impurities such as acidic gas and alkaline gas from air or hydrogen gas by bringing the gas or the hydrogen gas into contact with a filter having an ion-exchange resin.

Japanese Unexamined Patent Application Publication No. 2002-93452 discloses a method for removing impurities such as sulfurous acid gas in fuel gas by bringing the fuel gas into contact with fused carbonate.

In a fuel-cell system introducing oxygen in air to a cathode or an anode of a fuel cell, a cleaning filter for removing gas which poisons a catalyst material used in a solid-polymer electrolytic film or an electrode (the gas is referred to as "fuel-cell electromotive-force-reducing impurities" in the present invention) is used. Japanese Unexamined Patent Application Publication No. 2003-297410 proposes a filter including a three-dimensional reticulate skeleton structure and a material retained in the three-dimensional reticulate skeleton structure for decomposing or adsorbing impurities. By using this cleaning filter, the fuel-cell electromotive-force-reducing impurities are removed from the air to be supplied to the fuel cell by being decomposed or adsorbed by the material retained in the three-dimensional reticulate skeleton structure. Since the decomposing or adsorbing material is retained in the three-dimensional reticulate skeleton structure, the specific surface of the material is large and the fuel-cell electromotive-force-reducing impurities are efficiently removed by decomposition or adsorption.

However, in Japanese Unexamined Patent Application Publication No. 2003-297410, conditions for sufficiently preventing a decrease in the fuel-cell electromotive force when the cleaning filter is actually used in a fuel-cell system have not been fully investigated. Therefore, the decrease in the fuel-cell electromotive force is not always sufficiently prevented.

Disclosure of Invention

It is an object of the present invention to provide a method and a device of air decontamination for fuel cell, which can efficiently clean air to be supplied to a fuel cell, stably maintain the characteristics of the fuel cell for a long period of time, and extend the lifetime of the fuel cell.

In the method of air decontamination for fuel cell of the present invention, the concentration of a sulfur compound in air to be supplied to a fuel cell is reduced to 5 ppb or less by removing the sulfur compound in the air by treating the air so as to remove fuel-cell electromotive-force-reducing impurities contained in the air in the manner specified in appended claim 1.

The device of air decontamination for fuel cell which can be used in the method of the present invention, includes a means for cleaning fuel-cell air in accordance with the method of the present invention, which treats air to be supplied to a fuel cell so as to remove fuel-cell electromotive-force-reducing impurities contained in the air.

Air cleaned by the method for cleaning fuel-cell air according to the present invention can be introduced into a fuel cell as described herein.

In the present invention, the concentration of a sulfur compound is a volume concentration.

In the present invention, the concentration of a sulfur compound and space velocity described below are each an average value. Therefore, even if the concentration of the sulfur compound or the space velocity exceeds the range of the present invention instantaneously or for a short time, such a case is also within the scope of the present invention as long as the average value (e.g., an average value per hour) is within the range of the present invention.

The sulfur compounds of the present invention is one or more compounds selected from the group consisting of $SO_2$, $SO_3$, and $H_2S$. A typical sulfur compound is $SO_2$.

The inventors have conducted wide studies on causes of the instability in effects when the fuel-cell air is cleaned by using the cleaning filter disclosed in the above-mentioned Japanese Unexamined Patent Application Publication No. 2003-297410. During the process of the studies, the inventors have conducted intensive examinations of concentrations of sulfur compounds such as $SO_2$ in air, because the sulfur compounds such as $SO_2$, among the fuel-cell electromotive-force-reducing impurities present in atmospheric air, have the most influence on a fuel-cell system. Various noble metal catalysts such as Pt, Pd, and Ru are highly used in solid-polymer films and electrodes in the fuel cells in order to improve the characteristics of the films and electrodes. These noble metal catalysts are poisoned by inorganic or organic gas containing sulfur, inorganic or organic gas containing nitrogen, hydrocarbon gas, HCHO, $CH_3COOH$, or carbon monoxide adsorbed on the surfaces thereof. The deterioration of the catalysts caused by such fuel-cell electromotive-force-reducing impurities, in particular, sulfur compounds such as $SO_2$ is thought as one of the causes of a decrease in the electromotive force of the fuel cell. Consequently, the development of technologies for overcoming these problems is required for improving reliability and expanding the use of the fuel cell. The inventors have investigated a concentration of $SO_2$ contained in the fuel-cell air and a decrease in the electromotive force of the fuel cell, and have ascertained that there is a high relationship between them as shown in Example 1 below. The inventors have found that the decrease in the electromotive force of the fuel cell caused by the electromotive-force-reducing impurities in fuel-cell air can be substantially completely avoided when the concentration of the sulfur compounds in the fuel-cell air is reduce to 5 ppb or less. Thus, the present invention has been completed.

In accordance with the present invention, the characteristics of the fuel cell can be stably maintained for a long period of time and its lifetime can be extended by controlling the concentration of the sulfur compounds such as $SO_2$ i.e., the fuel-cell electromotive-force-reducing impurities in air to be supplied to the fuel cell such that a decrease in the electromotive force of the fuel cell is sufficiently prevented.

Brief Description of the Drawings

FIG. 1 is a logarithmic graph showing a relationship between a concentration of $SO_2$ in air to be supplied to a cathode and a rate of voltage reduction in Experimental example 1.

FIG. 2 is a magnified graph of a relevant part of the graph shown in FIG. 1.

FIG. 3 is a graph showing changes in concentration of $SO_2$ in outlet gas according to the time when cleaning filters in Experimental example 2 were used.

FIG. 4 is a block diagram showing a device used in a $SO_2$ gas adsorption test in Experimental example 2.

FIG. 5 is a block diagram showing a device used in pressure drop measurement in Experimental example 2.

Best Mode for Carrying Out the Invention

An embodiment of the present invention will now be described in detail.

In the present invention, the concentration of a sulfur compound in fuel-cell air is reduced to 5 ppb or less by removing a sulfur compound, which is one or more compounds selected from the group consisting of $SO_2$, $SO_3$, and $H_2S$ in air to be supplied to a fuel cell. When the concentration of the sulfur compound exceeds 5 ppb, the electromotive force of the fuel cell is promptly decreased due to an electromotive-force-reducing compound in the air. Thus, the concentration of the sulfur compound in the fuel-cell air may be 5 ppb or less, but, in general, the sulfur compound in the fuel-cell air is preferably removed to a significantly low concentration which is below a detection limit.

In the present invention, the sulfur compound in the fuel-cell air is removed to 5 ppb or less. This is done by using a cleaning filter as specified in appended claim 1, such as a cleaning filter disclosed in the above-mentioned Japanese Unexamined Patent Application Publication No. 2003-297410 and treating the air at a space velocity of 11100 $h^{-1}$ or less.

The cleaning filter used for cleaning the fuel-cell air in the present invention will now be described.

This cleaning filter includes a three-dimensional reticulate skeleton structure as a filter base and a material retained in this three-dimensional reticulate skeleton structure for decomposing or adsorbing the fuel-cell electromotive-force-reducing impurities.

Polyurethane foam is used for the three-dimensional reticulate skeleton structure. Above all, polyurethane foam having a three-dimensional reticulate skeleton structure of which a cell membrane is removed by blasting can be suitably used, because the polyurethane foam exhibits low pressure drop and high contact efficiency with air. Particularly, as the membrane-removed polyurethane foam, an ether-based material is more preferable than an ester-based material, because the ether-based material is superior in hydrolysis resistance and inhibits the filter base from being deteriorated by hydrolysis due to alkali impregnation described below.

The number of the cells of the polyurethane foam used as the filter base differs depending on adsorbent particles to be adhered to the base. The number of the cells of polyurethane foam is 5 to 50 pores on a line of 25.4 mm length, namely, 5 to 50 pores per inch (PPI). More preferably, the number is about 5 to 20 PPI. When the number of the cells is lower than 5 PPI, the pressure drop of the filter is decreased, but the contact efficiency with air is also decreased; which is not preferable. When the number of the cells is higher than 50 PPI, the contact efficiency with air is increased, but the pressure drop is increased to cause an increase in the load on an air-supplying fan of the fuel-cell system; which is not preferable.

A material retained in the filter base for adsorbing the fuel-cell electromotive-force-reducing impurities is preferably adsorbent particles. The adsorbent particles may be formed of one or more materials. The adsorbent particles may be optionally selected and used depending on the purpose of the use thereof from various adsorbent particles formed of, for example, activated charcoal, a zeolite, an ion-exchange resin, activated clay, activated alumina, or powdered silica gel. Activated charcoal is generally used because of versatility thereof. Charcoal particles having a BET-specific surface of 500 $m^2/g$ or more, more specifically, about 1000 to 2000 $m^2/g$ is preferable. A larger specific surface is better for adsorbability. However, there is a tendency that hardness of the adsorbent is decreased with an increase in the specific surface, and a larger specific surface potentially causes dusting in some types of the adsorbent.

When the adsorbent particles are made of activated charcoal, the activated charcoal may be impregnated with one or more alkaline materials selected from the group consisting of alkaline metal salts, alkaline metal hydroxides, alkaline earth metal salts, and alkaline earth metal hydroxides, for efficiently removing the sulfur compound in atmospheric air which causes a decrease in the electromotive force. Examples of the alkaline materials include potassium carbonate, sodium carbonate, potassium hydroxide, sodium hydroxide, magnesium carbonate, calcium carbonate, magnesium hydroxide, and calcium hydroxide. The impregnated charcoal may be prepared by previously impregnating activated charcoal with the alkaline material or may be prepared by retaining activated charcoal in a filter base and then impregnated the charcoal with the alkaline material. When the activated charcoal is excessively impregnated with the alkaline material, the adsorbing ability of the activated charcoal is impaired. Consequently, the amount of the impregnated alkaline material is preferably lower than 20 wt% of that of the activate charcoal. When the amount of the impregnated alkaline material is too small, the improvement in the performance of removing the sulfur compound cannot be sufficiently achieved by the impregnation of the alkaline material. Therefore, the amount of the alkaline material is preferably 0.1 to 20 wt%, more preferably 5 to 10 wt% for maintaining the adsorbing ability of the activated charcoal and securing the removing of the sulfur compound.

The adsorbent particles may support a catalyst for decomposing impurities. The catalyst may be directly supported on the filter base not through the adsorbent particles.

The cleaning filter used in the present invention is preferably prepared by retaining the adsorbent particles in the three-dimensional reticulate skeleton structure of the filter base via a binder layer. In particular, the cleaning filter is preferably prepared so that a part of the adsorbent particles is in contact with the binder layer and the remaining part is exposed from the binder layer. The adsorbent particles exposed from the binder layer become into direct contact with air to highly remove the impurities.

Any type of binders can be selected and used without specific limitation. It is preferable that the binder has strong adhesion to a filter base and barely clogs the pores of the adsorbent particles. From this viewpoint, the binder preferably includes a large amount of a solid component and a small amount of a volatile component, namely, it is suitable that the amount of the solid component is 30 wt% or more, preferably 50 wt% or more, and that the amount of an organic solvent is 50 wt% or less, preferably 0 wt%. A solvent-free binder can be suitably used for better adsorbability.

Examples of the binder include polyether- or polyester-urethane emulsion binders, acrylic emulsion binders, and moisture-curing urethane hot melt binders. Urethane prepolymers excessively containing NCO groups, more preferably methylene diisocyanate (MDI) urethane prepolymers may be used. MDI prepolymers are more preferable than trilene diisocyanate (TDI) prepolymers because, in the MDI prepolymers, free isocyanate is barely generated, the adsorption to the adsorbent particles is low, and hygienic problems in the manufacturing process are small.

When an urethane prepolymer excessively containing NCO groups is used as the binder, the viscosity of the prepolymer may be too high. In such a case, a minimum amount of an organic solvent is added to the prepolymer and then the application of the prepolymer is performed. After removing almost all of the organic solvent with dried hot air, adsorbent particles are adhered to the prepolymer. Thus, the adhesion of the solvent can be prevented while facilitating the processability; which is advantageous.

The binder may be applied to the filter base by impregnating the filter base with the binder in an impregnation tank and then squeezing the excess binder with a roller, or applying the binder to the surface of the filter base by spraying or using a coater and then impregnating the filter base with the binder by using a roller.

The amount of the binder adhered to the filter base varies depending on the type of the binder, but does not have any specific limitation. The amount of the binder is preferably 10 to 100 g/L, more preferably 20 to 50 g/L as an amount of a dried resin per unit volume (apparent volume) of the filter base. When the amount of the adhered binder is less than 10 g/L, the adhesion retention ability of the adsorbent particles is low. Therefore, difficulty in increasing the amount of the adsorbent particles adhered to the filter base or tendency of detachment of the adsorbent particles from the filter after the processing may occur. On the other hand, when the amount of the binder exceeds 100 g/L, the pressure drop is increased by the clogging and a broader part of the adsorbent particles is coated with the binder. Therefore, the detachment of the adsorbent particles is inhibited, but the adsorbability of the adsorbent particles themselves is decreased; which is disadvantageous.

The filter base thus previously adhered with the binder may be provided with the adsorbent particles by fluid bed impregnation, powder spraying, or dropping through a sieve. When the adsorbent particles are applied to the filter base by the powder spraying or the dropping through a sieve, the adsorbent particles can be uniformly adhered to the filter base by inverting the filter base so as to spray or drop the adsorbent particles to both surfaces of the filter base. The impregnation of the adsorbent particles into a three-dimensional reticulate skeleton structure and the certain adhesion of the adsorbent particles to the three-dimensional reticulate skeleton structure can be helped by vibrating the filter base during and/or after the adhesion of the adsorbent particles. The adhesion of the adsorbent particles to the three-dimensional reticulate skeleton structure can be helped by slightly compressing the thus-treated three-dimensional reticulate skeleton structure by passing it between a pair of or a plurality pairs of rollers after the adhesion of the adsorbent particles. On this occasion, the distance between the pair of rollers is preferable 90 to 60% of the thickness of the three-dimensional reticulate skeleton structure of the filter base.

After the adhesion of the adsorbent particles, the binder is cured. The curing of the binder may be performed by a method suitable for the respective binders. When a urethane prepolymer is used as the binder, the binder can be cured by superheated vapor. The process of this method is simple and a high fixing strength can be achieved. In addition, if the adsorbent particles are partially coated with the binder, fine pores are formed in the coat by the generation of carbon dioxide when the urethane is cured. Consequently, a decrease in the adsorbability is small.

In order to prevent the detachment of the adsorbent particles from the three-dimensional reticulate skeleton structure of the filter base, after the adhesion of the adsorbent particles to the three-dimensional reticulate skeleton structure and before the curing of the binder, an additional binder may be further applied on the former binder and then these binders may be cured. This significantly strongly retains the adsorbent particles in the three-dimensional reticulate skeleton structure of the filter base.

In such a case, the entire surfaces of the adsorbent particles fixed to the surficial layer are coated with the binder. Consequently, the fixing strength to the three-dimensional reticulate skeleton structure is increased, but the adsorbability of the adsorbent particles at that surficial layer portion is decreased. However, since the most part of the adsorbent particles fixed in the layer of the three-dimensional reticulate skeleton structure does not receive an influence of the binder that is applied to the surficial layer of the three-dimensional reticulate skeleton structure, the adsorbability of the entire adsorbent is not so decreased.

The thickness of the applied surficial layer can be controlled by adjusting the amount of the binder and may be optionally determined in consideration of an increase in the fixing strength of the adsorbent particles in the surficial layer and a decrease in the adsorbability of the entire adsorbent. The ratio of an adsorbability reduction due to the application of the surficial layer is decreased with an increase in the thickness of the three-dimensional reticulate skeleton structure. The binder applied to the surficial layer may be the same as that previously applied to the entire three-dimensional reticulate skeleton structure. Alternatively, an effect of a combination of binders may be obtained by using a plastic binder as the previous binder applied to the entire structure so that the flexibility of the three-dimensional reticulate skeleton structure is not impaired and a hard binder as the binder applied to the surficial layer so that a high fixing strength is achieved. The use of an emulsion binder, which readily causes occurrence of a defect such as pinholes in the coat, is also advantageous from the viewpoint of air permeability.

In the present invention, air to be supplied to a fuel cell for introducing oxygen to a cathode passes through such a cleaning filter to remove the fuel-cell electromotive-force-reducing impurities in the air. The space velocity of this air is 11100 h$^{-1}$ or less. When the space velocity exceeds 11100 h$^{-1}$, the cleaning filter promptly reaches breakthrough (namely, the ability for removing the fuel-cell electromotive-force-reducing impurities is impaired), and the fuel-cell electromotive-force-reducing impurities cannot be stably and certainly removed. A lower space velocity is better for maintaining the performance of removing the fuel-cell electromotive-force-reducing impurities, but the excessively low space velocity causes a decrease in the processing efficiency. Consequently, a large amount of the cleaning filter is required to clean the air necessary for the fuel cell, a cleaning system grows in size, and the load on a supply compressor is increased; which are not preferable. Therefore, the space velocity is preferably 10000 h$^{-1}$ or less, more preferably 7000 to 8000 h$^{-1}$.

In the present invention, the cleaning of the fuel-cell air is preferably conducted according to an ordinary method except that the type of the cleaning filter and the velocity of the air flow are controlled as specified in claim 1 so as to obtain such a space velocity. Thus, air containing the sulfur compound at a concentration of 5 ppb or less is obtained and supplied to a fuel cell.

In the present invention, a dust-removing filter may be provided upstream of the cleaning filter. Fuel-cell air may be supplied to this dust-removing filter to previously remove dust and then supplied to the cleaning filter to clean the air. In such a case, the performance of the cleaning filter can be further maintained over a long period of time. The dust-removing filter may be provided downstream of the cleaning filter so as to trap the adsorbent particles detached from the cleaning filter by supplying fuel-cell air cleaned by the cleaning filter to the dust-removing filter. In this case, an inflow of the adsorbent particles detached from the cleaning filter into a fuel cell can be certainly prevented.

Examples of the dust-removing filter include charged non-woven fabric, spunpond non-woven fabric, melt blue non-woven fabric, needle-punched non-woven fabric, embossed non-woven fabric, HEPA filters, and ULPA filters. Any material can be used for the filter without specific limitation. Examples of the material include organic fabric such as polypropylenes, polyesters, and polyimides; and inorganic fabric such as boron fiber and glass fiber. Furthermore, the dust-removing filter can be used in various shapes, such as a pleat, honeycomb, or flat-shape. Regarding the weight, there is not any specific limitation. The weight is preferably 15 to 500 $g/m^2$, more preferably 50 to 200 $g/m^2$ from the viewpoints of the dust-removing performance and flow resistance.

There is not any specific limitation regarding the fuel cell to which the method for cleaning fuel-cell air of the present invention applied. Examples of the fuel cell include polymer electrolyte fuel cells, alkaline fuel cells, phosphoric acid fuel cells, fused carbonate fuel cells, and solid oxide fuel cells. The fuel cell may be an installation type or a movable type for mounting to a vehicle.

Examples

The present invention will now be specifically described with Experimental examples, a Manufacturing example, an Example, and a Comparative example.

Experimental example 1

An experiment for investigating a relationship between a concentration of $SO_2$ in air to be supplied to a cathode and a voltage decay rate was conducted by systematically changing the concentration of $SO_2$ contained in the air used in a polymer electrolyte fuel cell (unit cell, effective area: 25 $cm^2$). In each test differing $SO_2$ concentrations, all fuel cells had the same specification and were in the unused state, and all conditions for the test were the same. A carbon-supported noble metal catalyst, which is generally used as an electrode catalyst of polymer electrolyte fuel cells, was used as an electrode catalyst; a platinum-ruthenium alloy catalyst was used as an anode catalyst; and a platinum catalyst was used as a cathode catalyst.

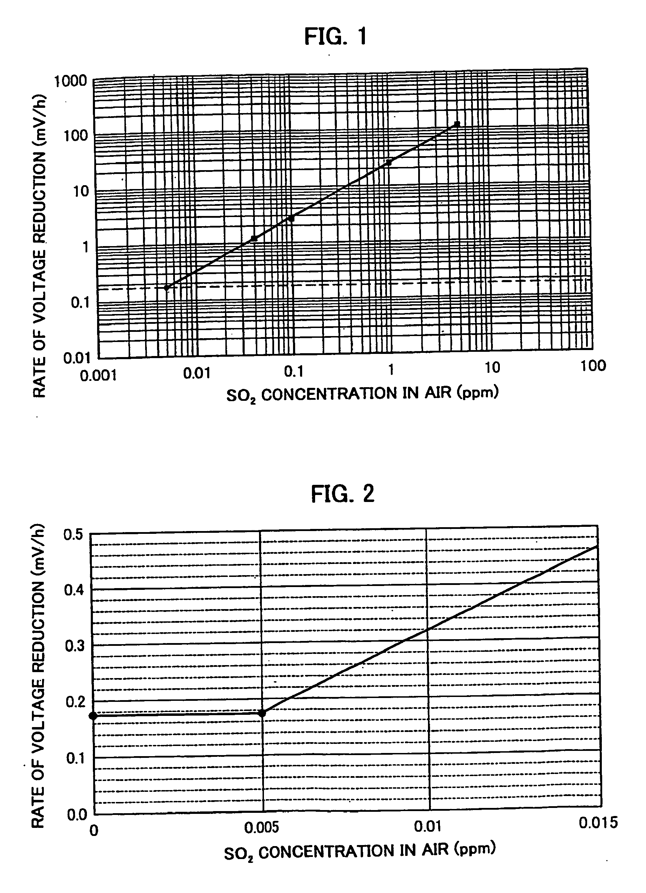

The anode and cathode of the unit cell of the polymer electrolyte fuel cell having the above-mentioned constitution were supplied with hydrogen humidified to 100% relative humidity and air humidified to 90% relative humidity, respectively. The reaction-gas flow was adjusted to a hydrogen utilization ratio of 70% and an oxygen utilization ratio of 40% at a cell temperature of 80°C at a current density of 350 $mA/cm^2$. The examination of the voltage-reduction rate of the fuel cell was started right after the addition of $SO_2$ to the cathode air. The $SO_2$ concentration in the air to be supplied to the cathode was defined as a volume concentration of dried $SO_2$ (at normal temperatures and pressures) after excluding moisture at a cathode-air inlet, and was adjusted to 5 ppm, 1 ppm, 0.1 ppm, 0.04 ppm (40 ppb), and 0.005 ppm (5 ppb). FIGS. 1 and 2 show a relationship between a concentration of $SO_2$ in air to be supplied to a cathode and a rate of voltage reduction.

As clearly shown in FIG. 1, there is a linear relationship between logarithmic values of the $SO_2$ concentration in the air to be supplied to the cathode and logarithmic values of the rate of the voltage reduction in the fuel cell in the range of 5 ppb to 5 ppm. Since the rate of the voltage reduction is sharply increased with the $SO_2$ concentration, it is obvious that the increase of the $SO_2$ concentration has a significant effect on continuous operation of the fuel cell.

As shown in FIG. 2, when the $SO_2$ concentration in the air is in the range equal to or less than 5 ppb, the rate of the voltage reduction (0.17 mV/h) is the same value as that in the air not containing $SO_2$. Here, the rate of the voltage reduction in the air not containing $SO_2$ means a rate of the voltage reduction caused by a factor deteriorating the catalyst activity, i.e., an electromotive-force-reducing factor which is irrelevant to the electromotive-force-reducing impurities in the cathode air. It is obvious from the result of this experiment that the voltage reduction caused by the electromotive-force-reducing impurities in the air can be substantially completely prevented by reducing the $SO_2$ concentration in the air to 5 ppb or less.

In this Experimental example, a relationship between a $SO_2$ concentration in air and a rate of voltage reduction is shown as an example. When $SO_3$ or $H_2S$ instead of $SO_2$ is added to the cathode air, a tendency similar to the result in this Experimental example is also observed. Thus, the voltage reduction caused by the electromotive-force-reducing impurities such as sulfur compounds in the cathode air can be prevented when the concentration of $SO_3$ or $H_2S$ is in

the range equal to or less than 5 ppb.

Manufacturing example 1

Polyether-polyurethane foam having cells removed membranes thereof at 10 PPI (the foam: 250 mm x 250 mm x 5 mm (thickness), Tradename: Everlight SF, Product Number: QW-09 5t, manufactured by Bridgestone Corporation) was used as a filter base. This foam was impregnated with a polyether urethane emulsion binder containing 50 wt% of a solid component so that the amount of the adhered binder per unit volume of the filter base was 30 g/L as a dried resin. After the drying at 100°C for 5 min, coconut-shell activated charcoal having an average particle size of 30 mesh (BET specific surface area: 1500 $m^2$/g) was uniformly supplied and adhered to both surfaces of and further into the base by dropping through a sieve. The amount of the activated charcoal was controlled to 150 g/L per unit volume of the filter base. Then, in order to improve the performance of the filter for removing a sulfur compound, a solution containing 13.8 wt% of potassium carbonate was applied to both surfaces of the filter base adhered with the activated charcoal so that the amount of the adhered solution is 326 g/$m^2$ (adhesion amount of potassium carbonate: 45 $m^2$/g, adhesion ratio of the potassium carbonate to the activated charcoal: 6 wt%). Then, the filter base was sufficiently dried to obtain a cleaning filter material.

Experimental example 2

The cleaning filter materials prepared in Manufacturing example 1 each having a thickness of 5 mm were stacked at the number of sheets shown in Table 1 to obtain three types of cleaning filter Nos. 1, 2, and 3 having the total thicknesses shown in Table 1. By using these cleaning filters, the $SO_2$ gas adsorption test and the pressure drop measurement below were carried out.

[$SO_2$ gas adsorption test]

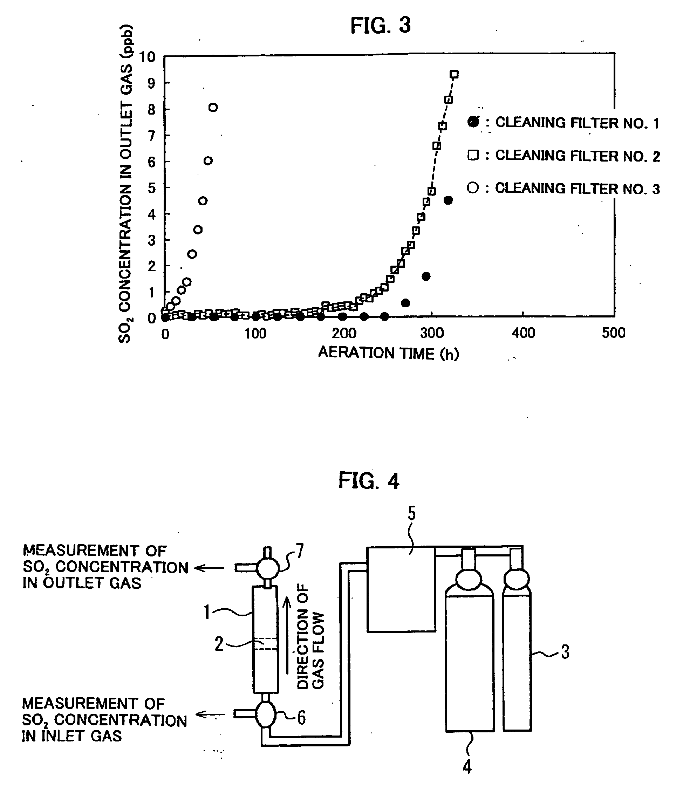

An accelerating test at a $SO_2$ concentration of 500 ppb, which is equivalent to about 100 times the $SO_2$ concentration in atmospheric air, was conducted using a test device shown in FIG. 4.

The cleaning filter No. 2 was cut so as to have a diameter of 20 mmφ. The cut cleaning filter is disposed in a vertical column 1 (a glass column having an internal diameter of 20 mmφ and a length of 200 mm) shown in FIG. 4 at a substantially center portion in the height direction of the column so that the thickness direction of the filter is the height direction of the column. $SO_2$ gas (50 ppm) and $N_2$ gas are supplied to a gas mixer 5 having a flow meter from a $SO_2$ tank 3 and a $N_2$ tank 4, respectively. The $SO_2$ gas is diluted 100 times to 500 ppb in the gas mixer 5 as $SO_2$-$N_2$ gas. The resulting gas is introduced to the column 1 from the bottom thereof at a gas flow of 2.333 L/min. $SO_2$ in the gas containing 500 ppb $SO_2$ introduced to the column 1 is removed during the passage through the cleaning filter No. 2. The thus-treated gas flows out from the top of the column 1. The reference numerals 6 and 7 represent three-way valves, and inlet gas and outlet gas are sampled to sequentially measure the respective $SO_2$ concentrations by a $SO_2$ gas measuring device (not shown, a device for an ultraviolet fluorescence method having a detection limit of 0.1 ppb).

Space velocity and linear velocity at a gas flow of 2.333 L/min were calculated for each filter. Table 1 shows the results.

The space velocity SV is a value obtained by dividing a gas-flow quantity Q by a filter volume V: SV = Q/V (($m^3$/h)/$m^3$ = $h^{-1}$). The linear velocity is a value obtained by dividing a gas-flow quantity by a filter area.

In this $SO_2$ adsorption test, $SO_2$ gas concentrations at the inlet and the outlet of the column 1 were measured. A $SO_2$-removing ratio was calculated from the measurement values. The length of time before that $SO_2$ leaks into the outlet gas and is detected in the outlet gas is shown in Table 1 as a breakthrough time. The length of time before that the $SO_2$-removing ratio reaches 99% (i.e., the length of time before that the $SO_2$ concentration in the outlet gas became 5 ppb) is shown in Table 1 as a 99% achievement time. FIG. 3 shows changes of $SO_2$ concentration in the outlet gas according to the time.

Generally, the $SO_2$ concentration in atmospheric air is about 5 ppb, which is about 1/100 of the $SO_2$ concentration 500 ppb used in the adsorption test. Consequently, it is estimated that the usable life of the cleaning filter will be 100 times longer than the breakthrough time in this adsorption test when the filter is used for cleaning the air to be supplied to a practical fuel cell. Therefore, the 100-fold of the breakthrough time is also shown in Table 1 as an estimated usable life in practical use.

[Pressure drop measurement test]

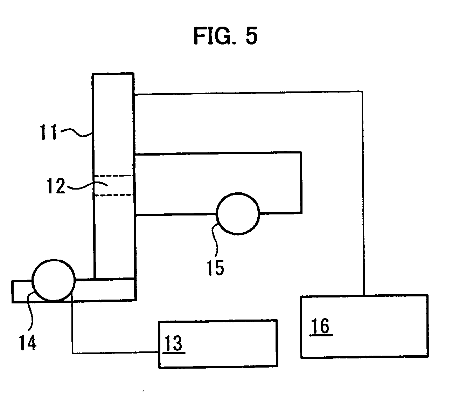

In order to examine a pressure drop when the linear velocity of the gas introduced in the column 1 used in the $SO_2$ gas adsorption test was 0.12 m/sec, the pressure drop measurement test was carried out by using a test device shown in FIG. 5.

As shown in FIG. 5, the cleaning filter material 12 (one sheet having a thickness of 5 mm) prepared in Manufacturing example 1 was disposed in a vertical wind-tunnel 11 (made of SUS having an internal diameter of 250 mm × 250 mm) at a substantially central portion in the height direction of the wind-tunnel so that the thickness direction of the filter was in the height direction of the wind-tunnel. An air-supplying fan 14 sent air to the wind-tunnel 11 from the bottom. The number of revolution of the fan was controlled by an inverter 13 so that the air velocity measured by a wind gauge 16 was 1 m/sec, 2 m/sec, or 3 m/sec. Pressure drop by the cleaning filter 12 at each air velocity was measured by a manometer 15. The result shows that the pressure drop $\Delta P$ (Pa) against the air velocity V (m/sec) is represented by an equation: $\Delta P = 23.4V^{-1.78}$.

The linear velocity was 0.12 m/sec when one sheet of the cleaning filter material was used in the $SO_2$ gas adsorption test. Pressure drop was calculated by substituting the linear velocity of 0.12 m/sec into the above-mentioned equation. The resulting value of this pressure drop was multiplied by the number of stacked sheets of each filter to calculate the pressure drop of each filter. The result is shown in Table 1 (without dust-removing filter).

Similarly, the measurement and calculation were carried out when dust-removing filters were disposed at the top and bottom of each filter. Each of the dust-removing filters was composed of two sheets of charged non-woven fabric each having a weight of 50 $g/m^2$, and four sheets in total were used for each measurement. The result is shown in Table 1 (with dust-removing filter).

The pressure drop by the dust-removing filter (a product having a weight of 50 $g/m^2$) was represented by an equation: $\Delta P$ (Pa) $= 23.4V^{1.78}$.

[Table 1]

| Cleaning filter No. | | | 1 | 2 | 3 |
|---|---|---|---|---|---|
| Number of stacked filter material (sheet) | | | 16 | 12 | 8 |
| Total thickness of cleaning filter (nm) | | | 80 | 60 | 40 |
| Space velocity ($h^{-1}$) | | | 5570 | 7427 | 11141 |
| Linear velocity (m/sec) | | | 0.12 | 0.12 | 0.12 |
| Result of $SO_2$ adsorption test | Breakthrough time (h) | | 270 | 220 | 0 |
| | 99% achievement time (h) | | 325 | 290 | 40 |
| | Estimated usable life in practical use (year)* | | 3.71 | 3.31 | 0.46 |
| Result of pressure drop measurement test | Pressure drop (Pa) | Without dust-removing filter | 9 | 6.7 | 4.5 |
| | | With dust-removing filter | 14 | 11.7 | 9.5 |
| *: Length of time before the $SO_2$-removing ratio reaches 99% when the assumed $SO_2$ concentration in atmospheric air is 5 ppb. | | | | | |

The experiment with cleaning filter No. 3 is a comparative experiment, which is not in accordance with the invention.

With reference to Table 1, it is confirmed that $SO_2$ in air can be stably and certainly removed for a long period of time by cleaning the air at a space velocity of 11100 $h^{-1}$ or less.

Example 1

Cleaning of fuel-cell air was conducted by using cleaning filter No. 1 (16 sheets of the cleaning filter material were stacked to have a thickness of 80 mm) in Experimental example 2.

A fuel-cell system used in the test included a reformulation unit, a fuel-cell body, an electric control unit, and accessories. Reformulated gas obtained by reformulating town gas (13 A) as raw fuel gas by the reformulation unit was supplied to an anode of the fuel-cell body. Air passed through the cleaning filter No. 1 prepared in Experimental example 2 and cut into 100 mm$\phi$ was supplied to a cathode. Under the conditions of a DC generating-end output of 0.95 kW and an average air flow of 3.5 $Nm^3/h$, electric-power generation was continuously performed for more than 1000 hr. Dust-removing filters (each composed of stacked 2 sheets of charged polypropylene non-woven fabric having a weight of 50 $g/m^2$) were disposed upstream and downstream of the cleaning filter to clean the introduced air and the cleaned air. The average $SO_x$ concentration and average $NO_x$ concentration in atmospheric air were 18 ppb and 50 ppb, respectively. The $SO_x$ in atmospheric air was certainly removed to the detection limit or less by the cleaning filter during the continuous operation of the electric-power generation.

After the electric-power generation was continuously performed for 1094 hr (integrated air flow: 3829 m$^3$), a ratio of electromotive-force reduction (a reduction percentage (%) of the electromotive-force after 1094-hr operation to the initial electromotive-force at the start of the electric-power generation) was examined. The ratio was shown as a relative value to a ratio of electromotive-force reduction in Comparative example 1 described below which was defined as 100. Table 2 shows the result.

The space velocity of the air flow to the cleaning filter at this time is shown in Table 2.

Comparative example 1

Electric-power generation was continuously operated as in Example 1 except that the air to be supplied to the cathode was not cleaned with the cleaning filter. The ratio of electromotive-force reduction was examined.

[Table 2]

| | Example 1 | Comparative example 1 |
|---|---|---|
| Cleaning filter | Presence | Absence |
| Space velocity (h$^{-1}$) | 5570 | - |
| Ratio of electromotive-force reduction (%) | 54 | 100 |

As clearly shown in Table 2, by removing $SO_2$ from the air to be supplied to the cathode by using the cleaning filter at a predetermined space velocity, the electromotive-force reduction can be suppressed by 46% compared to that when the cleaning filter was not used of the cleaning the air.

It is desirable that the decrease in the electromotive force can be completely prevented. However, in an actual fuel-cell system, not only the fuel-cell electromotive-force-reducing impurities in air but also electrode deterioration influences on the electromotive-force reduction. Therefore, an electromotive-force reduction of about 54% of the reduction in a conventional system not being provided with a filter cannot be avoided, namely, it is thought that the electromotive-force reduction cannot be completely prevented by cleaning the air alone.

**Claims**

1.  A method of air decontamination for fuel cell to remove contaminants reducing cell performance in air to be supplied to a fuel cell by treating the air, wherein
    the concentration of a sulfur compound is reduced to 5 ppb by volume or less by removing the sulfur compound in the air,
    the sulfur compound is one or more compounds selected from the group consisting of $SO_2$, $SO_3$, and $H_2S$,
    the sulfur compound in fuel-cell air is removed by applying the air to be supplied to the fuel cell to a cleaning filter comprising a three-dimensional reticulate skeleton structure and a material retained in the three-dimensional reticulate skeleton structure for decomposing or adsorbing the fuel-cell electromotive-force-reducing impurities,
    the space velocity of the air applied to the cleaning filter is 11100 h$^{-1}$ or less, wherein the space velocity is a value obtained by dividing the gas flow quantity Q by a filter volume V according to the following relationship:

$$SV = Q / V$$

    wherein Q is expressed in the unit m$^3$/h and V is expressed in the unit m$^3$,
    and wherein
    the three-dimensional reticulate skeleton structure is polyurethane foam wherein the number of the cells is 5 to 50 pores on a line of 25.4 mm length.

2.  A method of air decontamination for fuel cell according to claim 1,
    wherein said material retained in the three-dimensional reticulate skeleton structure is adsorbent particles retained in the three-dimensional reticulate skeleton structure via a binder layer, and a part of the adsorbent particles is in contact with the binder layer and the remaining part is exposed from the binder layer, whereby the adsorbent particles exposed from the binder layer become into direct contact with air and impurities are removed.

3. The method of air decontamination for fuel cell according to claim 1, wherein the space velocity is from 7000 to 8000 h$^{-1}$.

4. The method of air decontamination for fuel cell according to claim 1, wherein the material for decomposing or adsorbing the fuel-cell electromotive-force-reducing impurities comprises adsorbing particles formed of one or more materials.

5. The method of air decontamination for fuel cell according to claim 1, wherein the material for decomposing or adsorbing the fuel-cell electromotive-force-reducing impurities comprises adsorbing particles formed of one or more materials selected from the group consisting of activated coconut shell charcoal, activated wood charcoal, petroleum pitch spherical activated charcoal, pelletized activated charcoal, natural zeolites, synthesized zeolites, activated clay, surfactants, cationic- or anionic-exchange resins, cationic- or anionic-exchange fibers, chelate resins, chelate compounds, inorganic cationic- or anionic-adsorbing agents, inorganic synthesized chemical deodorants, porous adsorbents supporting compounds chemically decomposing target gas components by chemical reaction such as neutralization, porous adsorbents supporting oxidizing or reducing catalysts of noble or base metals, and porous adsorbents supporting or coated with photocatalysts such as titanium oxide.

6. The method of air decontamination for fuel cell according to claim 5, wherein the adsorbing particles are formed of activated charcoal impregnated with one or more alkaline materials selected from the group consisting of alkaline metal salts, alkaline metal hydroxides, alkaline earth metal salts, and alkaline earth metal hydroxides.

7. The method of air decontamination for fuel cell according to claim 6, wherein the amount of the alkaline materials is 20 wt% or less of that of the activated charcoal.

8. The method of air decontamination for fuel cell according to claim 4, wherein the adsorbing particles are retained in a three-dimensional reticulate skeleton structure via a binder layer.

9. The method of air decontamination for fuel cell according to claim 1, wherein the polyurethane foam is polyether-polyurethane foam.

10. The method of air decontamination for fuel cell according to claim 8, wherein the binder is a polyether-urethane binder.

11. The method of air decontamination for fuel cell according to claim 1, wherein a dust-removing filter is provided upstream and/or downstream of the cleaning filter.

12. The method of air decontamination for fuel cell according to claim 1, wherein the number of the cells is 5 to 20 pores on a line of 25.4 mm length.

13. The method of air decontamination for fuel cell according to claim 1, wherein the material retained in the three-dimensional reticulate skeleton structure is adsorbent particles retained in the three-dimensional reticulate skeleton structure via a binder layer, and a part of the adsorbent particles is in contact with the binder layer and the remaining part is exposed from the binder layer.

14. The method of air decontamination for fuel cell according to claim 13, wherein the remaining part of the adsorbent particles is in direct contact with air.

15. The method of air decontamination for fuel cell according to claim 1, wherein the fuel cell is a polymer electrolyte fuel cell.

**Patentansprüche**

1. Verfahren zur Reinigung von Luft für eine Brennstoffzelle, um Verunreinigungen, die die Zellleistung reduzieren, in Luft, die der Brennstoffzelle zugeführt werden soll, durch Behandlung der Luft zu entfernen, bei dem die Konzentration einer Schwefelverbindung auf 5 ppb oder weniger, bezogen auf das Volumen, reduziert wird, indem die Schwefelverbindung in der Luft entfernt wird, die Schwefelverbindung eine oder mehrere Verbindungen ist, die aus der Gruppe ausgewählt ist, die aus $SO_2$, $SO_3$ und $H_2S$ besteht,

**EP 1 699 103 B1**

die Schwefelverbindung in der Luft für die Brennstoffzelle dadurch entfernt wird, dass die Luft, die der Brennstoffzelle zugeführt werden soll, einem Reinigungsfilter zugeführt wird, der eine dreidimensionale netzartige Gerüststruktur umfasst und ein Material, das in der dreidimensionalen Gerüststruktur zurückgehalten wird, um die Verunreinigungen, die die elektromotorische Kraft der Brennstoffzelle reduzieren, zu zersetzen oder zu adsorbieren,

die Raumgeschwindigkeit der Luft, die dem Reinigungsfilter zugeführt wird, 11100 h$^{-1}$ oder weniger beträgt, wobei die Raumgeschwindigkeit ein Wert ist, der durch das Dividieren der Gasdurchflussmenge Q durch ein Filtervolumen V nach der folgenden Beziehung erhalten wird:

$$SV = Q/V$$

in der Q in der Einheit m$^3$/h angegeben ist und V in der Einheit m$^3$ angegeben ist,
und bei dem
die dreidimensionale netzartige Gerüststruktur ein Polyurethanschaum ist, in dem die Anzahl der Zellen 5 bis 50 Poren auf einer Linie mit einer Länge von 25,4 mm beträgt.

2. Verfahren zur Reinigung von Luft für eine Brennstoffzelle nach Anspruch 1,
bei dem das Material, das in der dreidimensionalen netzartigen Gerüststruktur zurückgehalten wird, Adsorbenspartikel sind, die in der dreidimensionalen Gerüststruktur über eine Bindemittelschicht zurückgehalten werden, und ein Teil der Adsorbenspartikel in Kontakt mit der Bindemittelschicht ist und der verbleibende Teil von der Bindemittelschicht freiliegt, wobei die Adsorbenspartikel, die von der Bindemittelschicht freiliegen, in einen unmittelbarem Kontakt mit Luft treten und die Verunreinigungen entfernt werden.

3. Verfahren zur Reinigung von Luft für eine Brennstoffzelle nach Anspruch 1, bei dem die Raumgeschwindigkeit von 7000 bis 8000 h$^{-1}$ ist.

4. Verfahren zur Reinigung von Luft für eine Brennstoffzelle nach Anspruch 1, bei dem das Material für die Zersetzung oder Adsorption der Verunreinigungen, die die elektromotorische Kraft der Brennstoffzelle reduzieren, adsorbierende Partikel umfasst, die aus einem oder mehreren Materialien gebildet sind.

5. Verfahren zur Reinigung von Luft für eine Brennstoffzelle nach Anspruch 1, bei dem das Material für die Zersetzung oder Adsorption der Verunreinigungen, die die elektromotorische Kraft der Brennstoffzelle reduzieren, adsorbierende Partikel umfasst, die aus einem oder mehreren Materialien gebildet sind, die aus der Gruppe ausgewählt sind, die besteht aus: Aktivkohle aus Kokosnussschalen, aktivierter Holzkohle, sphärischer Aktivkohle aus Erdölpech, pelletierter Aktivkohle, natürlichen Zeolithen, synthetischen Zeolithen, aktiviertem Ton, Tensiden, kationischen oder anionischen Austauscherharzen, kationischen oder anionischen Austauschfasern, Chelatharzen, Chelatverbindungen, anorganischen kationischen oder anionischen Adsorbtionsmitteln, anorganischen synthetischen chemischen Deodorantien, porösen Adsorbentien, die Substanzen tragen, die die Zielgaskomponenten durch eine chemische Reaktion, wie Neutralisation, zersetzen, porösen Adsorbentien, die oxidierende oder reduzierende Katalysatoren aus Edelmetallen oder basischen Metallen tragen und porösen Adsorbentien, die Fotokatalysatoren, wie Titanoxid, tragen oder damit beschichtet sind.

6. Verfahren zur Reinigung von Luft für eine Brennstoffzelle nach Anspruch 5, bei dem die adsorbierenden Partikel aus Aktivkohle gebildet sind, die mit einem oder mehreren alkalischen Materialien imprägniert ist, die aus der Gruppe ausgewählt sind, die aus Alkalimetallsalzen, Alkalimetallhydroxiden, Erdalkalimetallsalzen und Erdalkalimetallhydroxiden besteht.

7. Verfahren zur Reinigung von Luft für eine Brennstoffzelle nach Anspruch 6, bei dem die Menge der alkalischen Materialien 20 Gew.% oder weniger der Aktivkohle ist.

8. Verfahren zur Reinigung von Luft für eine Brennstoffzelle nach Anspruch 4, bei dem die adsorbierenden Partikel in einer dreidimensionalen netzartigen Gerüststruktur über eine Bindemittelschicht zurückgehalten werden.

9. Verfahren zur Reinigung von Luft für eine Brennstoffzelle nach Anspruch 1, bei dem der Polyurethanschaum ein Polyether-Polyurethanschaum ist.

10. Verfahren zur Reinigung von Luft für eine Brennstoffzelle nach Anspruch 8, bei dem das Bindemittel ein Polyether-Urethanbindemittel ist.

**11.** Verfahren zur Reinigung von Luft für eine Brennstoffzelle nach Anspruch 1, bei dem ein Staubentfernungsfilter stromaufwärts und/oder stromabwärts von dem Reinigungsfilter angeordnet ist.

**12.** Verfahren zur Reinigung von Luft für eine Brennstoffzelle nach Anspruch 1, bei dem die Anzahl der Zellen 5 bis 20 Poren auf einer Linie mit einer Länge von 25,4 mm beträgt.

**13.** Verfahren zur Reinigung von Luft für eine Brennstoffzelle nach Anspruch 1, bei dem das Material, das in der dreidimensionalen netzartigen Gerüststruktur zurückgehalten wird, Adsorbenspartikel sind, die in der dreidimensionalen netzartigen Gerüststruktur über eine Bindemittelschicht zurückgehalten werden, und ein Teil der Adsorbenspartikel in Kontakt mit der Bindemittelschicht ist und der verbleibende Teil von der Bindemittelschicht freiliegt.

**14.** Verfahren zur Reinigung von Luft für eine Brennstoffzelle nach Anspruch 13, bei dem der verbleibende Teil der Adsorbenspartikel in einem unmittelbaren Kontakt mit Luft ist.

**15.** Verfahren zur Reinigung von Luft für eine Brennstoffzelle nach Anspruch 1, bei dem die Brennstoffzelle eine Polymerelektrolyt-Brennstoffzelle ist.

## Revendications

**1.** Procédé de décontamination d'air destiné à une pile à combustible pour éliminer des contaminants réduisant la performance de la pile dans l'air devant être fourni à une pile à combustible par traitement de l'air, dans lequel
la concentration d'un composé de soufre est réduite à 5 ppb en volume ou moins en éliminant le composé de soufre dans l'air,
le composé de soufre représente un ou plusieurs composé(s) choisi(s) dans le groupe constitué de $SO_2$, de $SO_3$, et de $H_2S$,
le composé de soufre dans l'air de pile à combustible est éliminé en appliquant l'air devant être fourni à la pile à combustible à un filtre d'épuration comprenant une structure de squelette réticulée tridimensionnelle et une matière retenue dans la structure de squelette réticulée tridimensionnelle destinée à décomposer ou adsorber les impuretés réduisant la force électromotrice de la pile à combustible,
la vitesse spatiale de l'air appliqué au filtre d'épuration est de 11100 $h^{-1}$ ou moins, où la vitesse spatiale est une valeur obtenue en divisant la quantité de débit de gaz Q par un volume de filtre V selon la relation suivante :

$$SV = Q \ / \ V$$

où Q est exprimé par l'unité $m^3/h$ et V est exprimé par l'unité $m^3$,
et dans lequel
la structure de squelette réticulée tridimensionnelle est une mousse de polyuréthane, dans laquelle le nombre d'alvéoles est de 5 à 50 pores sur une ligne de longueur égale à 25,4 mm.

**2.** Procédé de décontamination d'air destiné à une pile à combustible selon la revendication 1,
dans lequel ladite matière retenue dans la structure de squelette réticulée tridimensionnelle représente des particules d'adsorbant retenues dans la structure de squelette réticulée tridimensionnelle par l'intermédiaire d'une couche de liant, et une partie des particules d'adsorbant est en contact avec la couche de liant et la partie restante est exposée à partir de la couche de liant, moyennant quoi les particules d'adsorbant exposées à partir de la couche de liant deviennent en contact direct avec l'air et les impuretés sont éliminées.

**3.** Procédé de décontamination d'air destiné à une pile à combustible selon la revendication 1, dans lequel la vitesse spatiale est de 7000 à 8000 $h^{-1}$.

**4.** Procédé de décontamination d'air destiné à une pile à combustible selon la revendication 1, dans lequel la matière destinée à décomposer ou adsorber les impuretés réduisant la force électromotrice de la pile à combustible comprend des particules adsorbantes formées d'une ou de plusieurs matière(s).

**5.** Procédé de décontamination d'air destiné à une pile à combustible selon la revendication 1, dans lequel la matière destinée à décomposer ou adsorber les impuretés réduisant la force électromotrice de la pile à combustible comprend des particules adsorbantes formées d'une ou de plusieurs matière(s) choisie(s) dans le groupe constitué de charbon actif de coque de noix de coco, de charbon de bois activé, de charbon actif sphérique de brai de pétrole, de charbon actif en granulés, de zéolites naturelles, de zéolites de synthèse, d'argile activée, de tensioactifs, de résines échangeuses de cations ou d'anions, de fibres échangeuses de cations ou d'anions, de résines de chélate, de composés de chélate, d'agents adsorbants inorganiques cationiques ou anioniques, de déodorants chimiques inorganiques de synthèse, d'adsorbants poreux supportant des composés pouvant décomposer chimiquement des composants gazeux cibles par réaction chimique telle que la neutralisation, d'adsorbants poreux supportant des catalyseurs oxydants ou réducteurs de métaux nobles ou de métaux de base, et d'adsorbants poreux supportant ou revêtus de photo-catalyseurs tels que l'oxyde de titane.

**6.** Procédé de décontamination d'air destiné à une pile à combustible selon la revendication 5, dans lequel les particules adsorbantes sont constituées de charbon actif imprégné d'une ou de plusieurs matière(s) alcaline(s) choisie(s) dans le groupe constitué de sels de métaux alcalins, d'hydroxydes de métaux alcalins, de sels de métaux alcalino-terreux, et d'hydroxydes de métaux alcalino-terreux.

**7.** Procédé de décontamination d'air destiné à une pile à combustible selon la revendication 6, dans lequel la quantité des matières alcalines est inférieure ou égale à 20% en poids de celle du charbon actif.

**8.** Procédé de décontamination d'air destiné à une pile à combustible selon la revendication 4, dans lequel les particules adsorbantes sont retenues dans une structure de squelette réticulée tridimensionnelle par l'intermédiaire d'une couche de liant.

**9.** Procédé de décontamination d'air destiné à une pile à combustible selon la revendication 1, dans lequel la mousse de polyuréthane est une mousse de polyéther-polyuréthane.

**10.** Procédé de décontamination d'air destiné à une pile à combustible selon la revendication 8, dans lequel le liant est un liant de polyéther-uréthane.

**11.** Procédé de décontamination d'air destiné à une pile à combustible selon la revendication 1, dans lequel un filtre de dépoussiérage est prévu en amont et/ou en aval du filtre d'épuration.

**12.** Procédé de décontamination d'air destiné à une pile à combustible selon la revendication 1, dans lequel le nombre d'alvéoles est de 5 à 20 pores sur une ligne de longueur égale à 25,4 mm.

**13.** Procédé de décontamination d'air destiné à une pile à combustible selon la revendication 1, dans lequel la matière retenue dans la structure de squelette réticulée tridimensionnelle représente des particules d'adsorbant retenues dans la structure de squelette réticulée tridimensionnelle par l'intermédiaire d'une couche de liant, et une partie des particules d'adsorbant est en contact avec la couche de liant et la partie restante est exposée à partir de la couche de liant.

**14.** Procédé de décontamination d'air destiné à une pile à combustible selon la revendication 13, dans lequel la partie restante des particules d'adsorbant est en contact direct avec l'air.

**15.** Procédé de décontamination d'air destiné à une pile à combustible selon la revendication 1, dans lequel la pile à combustible est une pile à combustible à électrolyte polymère.

## FIG. 1

X-axis: SO$_2$ CONCENTRATION IN AIR (ppm)
Y-axis: RATE OF VOLTAGE REDUCTION (mV/h)

## FIG. 2

X-axis: SO$_2$ CONCENTRATION IN AIR (ppm)
Y-axis: RATE OF VOLTAGE REDUCTION (mV/h)

14

FIG. 3

FIG. 4

# FIG. 5

**EP 1 699 103 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000277139 A
- JP 2000327305 A
- JP 2001313057 A
- JP 2002093452 A
- JP 2003297410 A